# EUROPÄISCHE PATENTANMELDUNG

(11) **EP 1 137 311 A2**
(43) Veröffentlichungstag der Anmeldung: **26.09.2001**
(21) Anmeldenummer: 01440065.9
(22) Anmeldetag: 12.03.2001
(51) Int. Cl.: H04Q 11/00

(54) **Optisches Netzelement**

(30) Priorität: 20.03.2000 DE 10013489
(71) Anmelder: ALCATEL, 75008 Paris (FR)
(72) Erfinder: Sigloch, Rainer, 71686 Remseck (DE)
(74) Vertreter: Urlichs, Stefan, Dipl.-Phys.

(57) **Zusammenfassung**

Für zukünftige optische WDM-Netzen werden optische Netzelemente (OADM) benötigt, die einzelne Wellenlängen aus dem Multiplexsignal herausnehmen und einfügen können oder die einzelne Wellenlängen verschalten können. Ein solches optischen Netzelement (OADM) enthält optische Empfängern (OR1-ORN) und optische Sender (OT1-OTN), die für jeweils zum Empfangen beziehungsweise Senden einer vorbestimmten Wellenlänge ausgebildet sind, und mit einer zwischen den Empfängern und den Sendern angeordneten Raumschaltmatrix (SSM) verbunden sind, die zum wahlfreien Verschalten von in den einzelnen Wellenlängen empfangenen Digitalsignalen dient.

Bei einem erfindungsgemäßen optischen Netzelement ist ein weiterer optischer Sender vorgesehen, der ebenfalls an die Raumschaltmatrix angeschlossen ist und eine Neutaktung und Restrukturierung eines zu sendenden rahmenstrukturierten Digitalsignals (FP) durchführt, so daß die gemäß einer Multiplexhierarchie in die Transportrahmen verschachtelten Multiplexeinheiten in feste Spalten restrukturierter Rahmen eingebettet werden, die sich von einem zum nächsten Rahmen nicht verändern.

## Beschreibung

Die Erfindung betrifft ein optisches Netzelement zum Verschalten von Wellenlängen eines wellenlängen-gemultiplexten Multiplexsignals, mit optischen Empfängern und Sendern, die für jeweils zum Empfangen beziehungsweise Senden einer vorbestimmten Wellenlänge ausgebildet sind, und mit einer zwischen den Empfängern und den Sendern angeordneten Raumschaltmatrix zum wahlfreien Verschalten von in den einzelnen Wellenlängen empfangenen Digitalsignalen. Die Erfindung betrifft auch ein System aus einem solchen optischen Netzelement und einem digitalen Crossconnect, der zum Verschalten von in einem zeitlagen-gemultiplexten Digitalsignal gemäß einer Multiplexhierarchie eines synchronen digitalen Nachrichtenübertragungssystems verschachtelten Multiplexeinheiten ausgebildet ist, sowie einen solchen digitalen Crossconnect an sich.

Um in zukünftigen optischen Nachrichtenübertragungsnetzen höhere Bitraten transportieren zu können, ist vorgesehen, mehrere Digitalsignale parallel in verschiedenen Wellenlängen in Form eines wellenlängen-gemultiplexten Multiplexsignals zu transportieren. Diese Technik ist als WDM (wavelength division multiplexing) oder DWDM (dense wavelength division multiplexing) bekannt. In solchen optischen Übertragungsnetzen werden optische Netzelemente benötigt wie Add/Drop-Multiplexer, die einzelne Wellenlängen aus dem Multiplexsignal herausnehmen und einzelne Wellenlängen in ein Multiplexsignal einfügen können, sowie optische Crossconnects, die einzelne Wellenlängen zwischen verschiedenen Multiplexsignalen oder auch innerhalb eines Multiplexsignals verschalten können. Ein erfolgversprechender Ansatz für diese Aufgaben besteht darin, ein empfangenes Multiplexsignal z.B. mittels Bandpassfilterung in die einzelnen Wellenlängen aufzuspalten und über eine Raumschaltmatrix zu verschalten. Für die nähere Zukunft werden derzeit elektrische Lösungen entwickelt, bei denen die in den einzelnen Wellenlängen enthaltenen optischen Digitalsignale im Empfänger zu elektrischen Digitalsignalen gewandelt, von einer elektrischen Raumschaltmatrix verschaltet und in Sendern wieder zu optischen Digitalsignalen gewandelt werden. Für die fernere Zukunft wird auch an einer vollständig optischen Verschaltung der Digitalsignale gearbeitet.

Prinzipiell kann mit einer Wellenlänge ein Digitalsignal beliebigen Dateninhalts und -formats transportiert werden wie IP-Pakete, ATM-Zellen oder Nachrichtensignale die nach den ITU-T Empfehlungen für SDH und SONET strukturiert sind. Heutige Übertragungsnetze sind hauptsächlich SDH- und SONET-Netze. Daher wird eine wichtige Anwendung in zukünftigen WDM-Netzen die Übertragung von SDH-Signalen spielen. Dabei handelt es sich um zeitlagen-gemultiplexte, rahmenstrukturierte Nachrichtensignale in die gemäß einer Multiplexhierarchie virtuelle Container unterschiedlicher Hierarchieebenen in einem Nutzlastbereich der Transportrahmen verschachtelt sind und von einem Zeiger im Kopfbereich der Transportrahmen adressiert werden. Virtuelle Container enthalten die eigentliche zu übertragende Nutzinformation zusammen mit Steuerinformation für den Übertragungspfad im Netzwerk. Als Hierarchieebenen sind virtuelle Container der Größen VC-12 (VC-11 für SONET), VC-2, VC-3 und VC-4 (nur in SDH) festgelegt, wobei kleinere Container stets in größere verschachtelt und von einem Zeiger im Kopfbereich der größeren Container adressiert werden. Die genauer Struktur der Container und des Transportrahmens sowie die verschiedenen Möglichkeiten der Verschachtelung sind in ITU-T G.707 (3/96) dargestellt. SDH- und SONET-Netze werden im folgenden als synchrone Übertragungsnetze bezeichnet. Digitalsignale, die nach ITU-T G.707 strukturiert sind, werden im folgenden als synchrone Nachrichtensignale bezeichnet.

In solchen synchronen Übertragungsnetzen werden Netzelemente benötigt, wie Add/Drop-Multiplexer, die in der Lage sind, einzelne virtuelle Container unterschiedlicher Hierarchieebenen aus einem synchronen Nachrichtensignal herauszunehmen oder einzufügen, digitale Crossconnects, die Übertragungspfade durch rangieren von virtuellen Containern schalten, sowie Leitungs- und Terminalmultiplexer, die Übertragungspfade terminieren können. Die Leitungsschnittstellen solcher Netzelemente müssen, um die Kompatibilität der Netzelemente untereinander zu gewährleisten und um eine Signalübertragung über eine längere Faserstrecke zu erlauben, verschiedenen genormten Anforderungen entsprechen. So wird gefordert, daß die Leitungsschnittstellen über ein zentrales Managementsystem abfragbar und konfigurierbar sind, daß zu sendende Nachrichtensignale in den Leitungsschnittstellen verwürfelt und empfangene Nachrichtensignale in den Leitungsschnittstellen entsprechend entwürfelt werden und daß ausgangsseitig eine Überwachung der Sendelaser auf Funktion und Sendepegel stattfindet.

Zusätzlich können in den Leitungsschnittstellen weitere Funktionen ausgeführt werden wie z.B. eine Restrukturierung empfangener Transportrahmen in ein internes Rahmenformat. Aus US 5,210,745 ist eine solche Restrukturierung bekannt, bei der die in dem empfangenen Transportrahmen enthaltenen virtuellen Container in feste Spalten des internen Rahmens gepackt werden, die sich von einem Rahmen zum nächsten nicht verändern und somit Zeigeraktionen (pointer justifications) im empfangenen Nachrichtensignal ausgeglichen werden. Dadurch wird erreicht, daß die Raum-Zeit-Schaltschaltmatrix des Netzelementes, der die internen Rahmen zugeführt werden, die virtuellen Container zeitschlitz-orientiert schalten kann.

Die geschilderten Funktionen machen Leitungsschnittstellen der Netzelemente jedoch technisch aufwendig und teuer. Ähnlich verhält es sich mit den Schnittstellen der optischen Netzelemente.

Es ist daher eine Aufgabe der vorliegenden Erfindung, ein optisches Netzelement für ein WDM-Netz anzugeben, mit dem auf einfachere und effiziente Weise synchrone Nachrichtensignale über das WDM-Netz transportiert werden können. Eine weitere Aufgabe besteht darin ein Netzelement für ein synchrones Übertragungsnetz anzugeben, mit dem auf einfachere und effiziente Weise synchrone Nachrichtensignale von einem optischen Netzelement eines WDM-Netzes empfangen werden können. Eine weitere Aufgabe der Erfindung ist, ein System aus einem solchen optischen Netzelement und einem solchen Netzelement für ein synchrones Übertragungsnetz anzugeben.

Die Aufgaben werden hinsichtlich des optischen Netzelementes gelöst durch die Merkmale des Anspruchs 1, hinsichtlich des Netzelementes für das synchrone Übertragungsnetz durch die Merkmale des Anspruchs 6 und hinsichtlich des Systems durch die Merkmale des Anspruchs 9. Vorteilhafte Ausgestaltungen sind den abhängigen Ansprüchen zu entnehmen.

Im folgenden wird die Erfindung anhand der Figuren 1 bis 3 in mehreren Ausführungsbeispielen erläutert. Es zeigt:
- Figur 1:: einen optischen Add/Drop-Multiplexer zum Verschalten von Wellenlängen eines wellenlängen-gemultiplexten Multiplexsignals,
- Figur 2:: einen digitalen Crossconnect für ein synchrones Übertragungsnetz zum Verschalten von Multiplexeinheiten eines zeitlagen-gemultiplexten Nachrichtensignals und
- Figur 3:: ein System aus dem optischen Add/Drop-Multiplexer aus Figur 1 und dem digitalen Crossconnect aus Figur 2.

In WDM-Netzen werden beliebige Digitalsignale transparent übertragen. Dazu wird jedem zu übertragenden Signal eine Wellenlänge zugewiesen und die einzelnen Wellenlängen werden zu einem Multiplexsignal wellenlängen-gemultiplext. Um die zu transportierenden Digitalsignale flexible im Netz rangieren zu können, werden optische Netzelemente benötigt. Die Granularität, die von einem solchen optischen Netzelement geschaltet werden kann, soll dabei eine Wellenlänge sein. Eine Hauptanwendung solcher WDM-Netze wird zumindest während der nächsten Jahre die Übertragung von synchronen Nachrichtensignalen aus einem synchronen Nachrichtennetz (SDH oder SONET) sein.

In optischen Netzelementen wird meist eine elektrische Schaltmatrix verwendet. Soll nun ein SDH-Netzelement an ein optisches Netzelement angeschlossen werden, so könnten einige Funktionen der Leitungsschnittstelle des SDH-Netzelementes bereits im optischen Netzelement ausgeführt werden. Durch die hohe Bandbreite der zu verschaltenden Digitalsignale besteht jedoch eine räumliche Beschränkung, d. h. es können nur kurze Strecken von einigen wenigen Metern mit elektrischen Leitungen überbrückt werden. Daher werden optisches Netzelement und SDH-Netzelement optisch verbunden. Ein Grundgedanke der Erfindung besteht nun darin, bei einer Verbindung zwischen einem optischen Netzelement und einem SDH-Netzelement, die Leitungsschnittstelle des SDH-Netzelementes zwar logisch diesem zuzuordnen, physikalisch jedoch dem optischen Netzelement. Zwischen den beiden Netzelementen kann dann eine günstige interne optische Schnittstelle verwendet werden.

Ein optischen Netzelement kann grob in zwei Hauptbaugruppen unterteilt werden: Die Kernbaugruppe ist eine breitbandige Schaltmatrix beispielsweise für 10Gbit/sec-Signale zusammen mit elektrischen Verbindungsmitteln wie Leitungstreiberschaltungen und Leitungsempfängerschaltungen. Die zweite Baugruppenklasse umfaßt die optischen I/O-Baugruppen (I/O: Input/Output), also optische Empfänger und optische Sender.

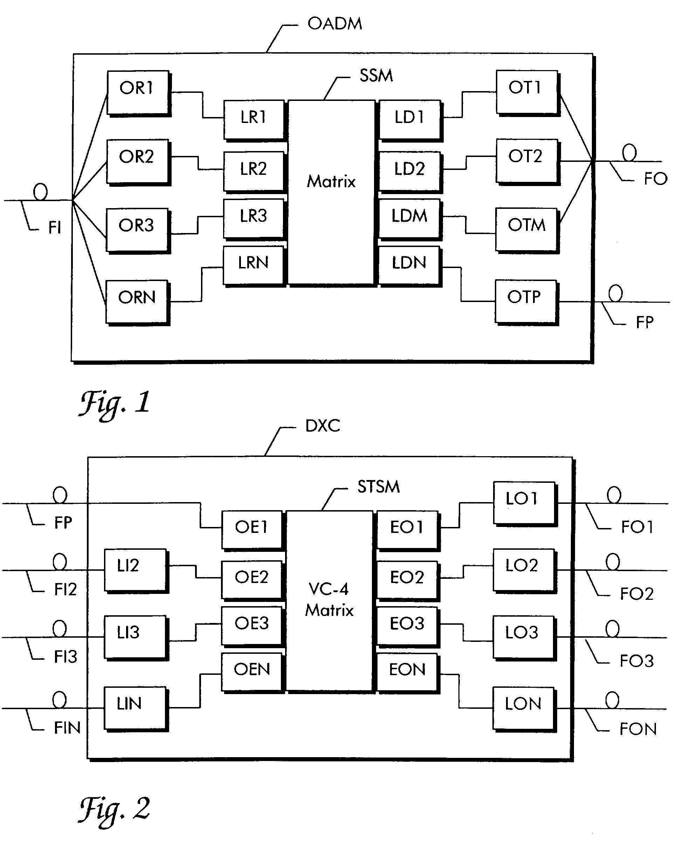

In Figur 1 ist als Ausführungsbeispiel für ein optisches Netzelement ein optischer Add/Drop-Multiplexer OADM dargestellt. Er besitzt einen optischen Eingang, an den ein Lichtwelleneiter angeschlossen ist über den ein wellenlängen-gemultiplextes optisches Multiplexsignal FI empfangen wird. Der optische Eingang ist über einen Splitter mit mehreren optischen Empfängern OR1-ORN verbunden, die jeweils für eine Wellenlänge vorgesehen sind. Jeder der optischen Empfänger empfängt eine ihm zugewiesene Wellenlänge und wandelt ein in dieser Wellenlänge enthaltenes optisches Digitalsignal in ein elektrisches Digitalsignal um. Ausgangsseitig sind die optischen Empfänger mit jeweils einem Leitungsempfänger LR1-LRN elektrisch verbunden. Für die elektrischen Verbindungen werden 50 Ohm Koaxialkabelschnittstellen verwendet.

Der OADM weist weiter eine elektrische Raumschaltmatrix SSM auf, die dazu dient, die empfangenen Digitalsignale wahlfrei zu verschalten. Bei der Raumschaltmatrix handelt es sich um eine NxN, d.h. um eine Schaltmatrix mit N Eingängen und N Ausgängen. In Figur 1 sind schematisch nur vier Ein- und Ausgänge gezeigt, im Ausführungsbeispiel ist jedoch N=128. Jeder beliebige der N Eingänge kann auf einen beliebigen der N Ausgänge geschaltet werden. An den Eingängen der Raumschaltmatrix SSM sind die Leitungsempfänger LR1-LRN angeschlossen. An den Ausgängen der Matrix sind Leitungstreiber LD1-LDN angeschlossen. Die Matrixkapazität von 128x128 ist ausreichend für Vier-Faser-Ringe (eine Faser je Richtung und eine redundante Faser je Richtung) mit 32 Wellenlängen pro Faser. Für andere Anwendungen wie einen optischen Crossconnect kann auch eine größere Matrixkapazität angemessen sein. Die Matrix schaltet die elektrischen Digitalsignale bitratentransparent für Bitraten zwischen 100Mbit/sec und 10Gbit/sec. Für Anwendungen, die höhere Bitraten erfordern, werden zukünftig sicher auch schnellere Schaltmatrizen, die beispielsweise Digitalsignale bis 40Gbit/sec schalten können, Verwendung finden. Die Schaltmatrix ist zudem broadcast-fähig, d.h. jeder Eingang kann gleichzeitig mit mehreren Ausgängen verbunden werden, so daß ein Eingangssignal auf mehrerer Ausgänge gleichzeitig geschaltet werden kann (Broadcast-Schaltung).

Jeder der Leitungstreiber LD1-LDN ist mit einem optischen Sender OT1-OTM, OTP verbunden. Die optischen Sender OT1-OTM erzeugen aus dem von dem angeschlossenen Leitungstreiber erhaltenen elektrischen Digitalsignal jeweils ein optisches Digitalsignals mit einer dem Sender zugeordneten Wellenlänge. In jedem dieser optischen Sender, findet eine Überwachung des Ausgangspegels des optischen Signals statt, um eine Übertragung der optischen Signale über lange Faserstrecken von mindestens 80km Länge zu gewährleisten. Ausgangsseitig sind die optischen Sender OT1-OTM über einen Koppler mit einem Ausgang des OADM verbunden. An diesen Ausgang ist ein Lichtwellenleiter angeschlossen, über den ein wellenlängen-gemultiplextes Multiplexsignal (FO) gesendet wird.

Sowohl intern, d.h. in der Schaltmatrix, als auch extern, d.h. in den Sendern und Empfängern wird eine Überwachung der Leistungsfähigkeit (performance monitoring) basierend auf dem an sich bekannten FEC-Verfahren (FEC: forward error correction) durchgeführt.

Über den Leitungstreiber LDN ist ein weiter optischer Sender OTP mit der Schaltmatrix SSM verbunden. Dieser weitere optische Sender OTP ist für synchrone Nachrichtensignale ausgelegt und führt Funktionen aus, die für eine Leitungsschnittstelle eines SDH-Netzelementes typisch sind. Insbesondere führt der Sender eine Neutaktung des synchronen Nachrichtensignals auf einen Referenztakt und eine Restrukturierung der in dem Nachrichtensignal enthaltenen Transportrahmen durch. Dabei werden Multiplexeinheiten, die gemäß der SDH-Multiplexhierarchie in den Nutzlastbereich jedes Transportrahmens verschachtelt sind und von einem Zeiger im Kopfbereich jedes Transportrahmens adressiert werden, stets so in die restrukturierten Transportrahmen eingebettet sind, daß der Zeigerwert von einem zum nächsten Transportrahmen unverändert bleibt. Dadurch werden Zeigeraktionen, die typischerweise in synchronen Übertragungsnetzen durchgeführt werden um Taktunterschiede der Netzelemente des Übertragungsnetzes auszugleichen, kompensiert.

Für die restrukturierten Rahmen wird ein proprietäres Rahmenformat verwendet, welches auch als internes Rahmenformat in SDH-Netzelementen zum Einsatz kommt. Daher wird dem Nachrichtensignal ein Kennzeichner angefügt sowie Check-Bits, die eine Fehlerprüfung erlauben. Das so erzeugte restrukturierte Nachrichtensignal wird dann mittels einer einfachen Laserdiode ohne Pegelüberwachung als optisches Digitalsignal an einem weiteren Ausgang des optischen OADM über eine weitere angeschlossene Faser gesendet. Bei diesem weiteren Sender OTP handelt es sich, da ein nicht standardkonformes Signalformat gesendet wird, um einen proprietären Ausgang.

Als Ausführungsbeispiel für ein Netzelement eines synchronen Übertragungsnetzes ist in Figur 2 ein digitaler Crossconnect DXC dargestellt. Der DXC hat mehrere optische Empfänger LI2-LIN, mehrere optische Sender LO1-LON und eine Raum-Zeit-Schaltmatrix STSM. Die Raum-Zeit-Schaltmatrix STSM ist eine NxN Matrix mit N Eingängen und N Ausgängen. Vorzugsweise kann die Schaltmatrix STMS als dreistufige Clos-Matrix ausgeführt sein. An die Eingänge der Schaltmatrix STSM sind optoelektronische Umsetzer OE1-OEN angeschlossen und die Ausgänge der Schaltmatrix STSM sind mit elektrooptischen Umsetzern EO1-EON verbunden. Die Matrix stellt mit den Umsetzern zusammen eine modulare Einheit dar, die mit Schnittstellenmodulen wie Sendern und Empfängern über einfache interne optische Verbindungen verschaltet wird. Die Matrix selbst ist vorzugsweise ebenfalls modular aufgebaut und dadurch einfach erweiterbar.

Der DXC ist somit hinsichtlich der Matrix und der Schnittstellen, d.h. der Sender und Empfängerschaltungen, modular aufgebaut und kann daher leicht erweitert werden. Die Funktionalität des DXC hängt stark von der Funktionalität ab, die von den Schnittstellenschaltungen zur Verfügung gestellt wird. Die einzelnen Module werden mit internen optischen Verbindungen mit einer Länge von bis zu 200m verbunden. Die Schaltmatrix hat eine Schaltkapazität von 2000 STM-1-Äquivalenten, kann jedoch auf eine Schaltkapazität von bis zu 16.000 STM-1-Äquivalenten ausgebaut werden. Die Konfiguration von Matrix und Schnittstellenschaltungen ist Software- gesteuert.

An die Empfänger LI2-LIN ist jeweils ein Lichtwellenleiter angeschlossen über den synchrone Nachrichtensignale FI2-FIN aus dem synchronen Nachrichtennetz empfangen werden, an das der DXC angeschlossen ist. Die Nachrichtensignale FI2-FIN sind zeitlagen-gemultiplexte optische Digitalsignale und weisen eine Rahmenstruktur aus aufeinanderfolgenden Transportrahmen auf, bei der Multiplexeinheiten verschiedener Größe gemäß einer Multiplexhierarchie in einem Nutzlastbereich jedes Transportrahmens verschachtelt sind. Die Multiplexeinheiten werden als virtuelle Container bezeichnet und enthalten die eigentlich zu übertragende Nutzinformation sowie Steuerinformation für den Übertragungspfad im Netzwerk. Als Hierarchieebenen sind virtuelle Container der Größen VC-12 (VC-11 für SONET), VC-2, VC-3 und VC-4 (nur in SDH) festgelegt, wobei kleinere Container stets in größere verschachtelt und von einem Zeiger im Kopfbereich der größeren Container adressiert werden. Der größte virtuelle Container (VC-4 bei SDH, jeweils drei VC-3 bei SONET) wird von einem Zeiger im Kopfbereich jedes Transportrahmens adressiert.

Jeder der Empfänger LI2-LIN dient als eine empfangsseitige Leitungsschnittstelle zum synchronen Nachrichtennetz und führt genormte Funktionen aus, wie das Entwürfeln der empfangenen Nachrichtensignale FI2-FIN und Kontroll- und Konfigurationsfunktionen auf Anforderung eines zentralen Managementsystem. Zusätzlich wird in jedem Empfänger eine Restrukturierung der empfangenen Transportrahmen in ein internes Rahmenformat durchgeführt. Dazu werden die empfangenen Nachrichtensignale auf einen internen Referenztakt neu getaktet und die in den empfangenen Transportrahmen enthaltenen virtuellen Container in feste Spalten eines neuen internen Rahmens gepackt, die sich von einem Rahmen zum nächsten nicht verändern. Das bedeutet, daß sich auch der Zeigerwert des Zeigers im Rahmenkopf der restrukturierten Rahmen von einem zum nächsten Rahmen nicht ändert. Jeder der Empfänger LR2-LRN ist über eine interne optische Verbindung, die im Ausführungsbeispiel nicht länger als 200m sein darf, an einen der optoelektronischen Umsetzer OE2-OEN angeschlossen und überträgt über diese Verbindung die restrukturierten synchronen Nachrichtensignale in dem internen Rahmenformat an die Schaltmatrix STSM.

Ausgangsseitig ist die Schaltmatrix STSM mit den optischen Sendern LO1-LON verbunden. Dazu ist jeder der elektrooptischen Umsetzer EO1-EON jeweils über eine interne optische Verbindung an einen der optischen Sender LO1-LON angeschlossen. Jeder der Sender LO1-LON dient als eine sendeseitige Leitungsschnittstelle ins synchrone Nachrichtennetz und führt ebenso wie die empfangsseitigen Leitungsschnittstellen genormte Funktionen aus, wie das Verwürfeln der zu sendenden Nachrichtensignale FO1-FON und Kontroll- und Konfigurationsfunktionen auf Anforderung des zentralen Managementsystems. In den sendeseitigen Leitungsschnittstellen werden die von der Schaltmatrix STSM empfangenen Digitalsignale, die im internen Rahmenformat strukturiert sind, in das für SDH vorgeschriebene Rahmenformat übersetzt. An die optischen Sender LO1-LON ist jeweils ein Lichtwellenleiter angeschlossen, über dem die derart umgesetzten Digitalsignale FO1-FON ins synchrone Übertragungsnetz gesendet werden.

An dem DXC ist ein weiterer Eingang vorgesehen, der nicht mit einem optischen Empfänger der vorstehend beschriebenen Art verbunden ist, sondern direkt an einen der optoelektronischen Umsetzer OE1 angeschlossen ist. An diesem Eingang ist eine optischen Faser angeschlossen, über die ein bereits restrukturiertes synchrones Nachrichtensignal FP von einem anderen Netzelement empfangen wird. Dazu ist der eingangsseitige Anschluß des optoelektrischen Wandlers OE1 als Eingang an die Außenseite des DXC geführt, so daß dem DXC über diesen Eingang das bereits auf denselben internen Referenztakt synchronisierte optische Nachrichtensignal FP zugeführt werden kann. Das Nachrichtensignal FP weist eine Rahmenstruktur aus aufeinanderfolgenden Transportrahmen auf, bei dem die in den Rahmen verschachtelten virtuellen Container in festen, d.h. von einem zum nächsten Rahmen gleichbleibenden, Spalten jedes Transportrahmens eingebettet sind und der Zeigerwert von einem zum nächsten Transportrahmen somit unverändert bleibt. Bei diesem weiteren Eingang handelt es sich, da ein nicht standardkonformes Signalformat erwartet wird, um einen proprietären Eingang.

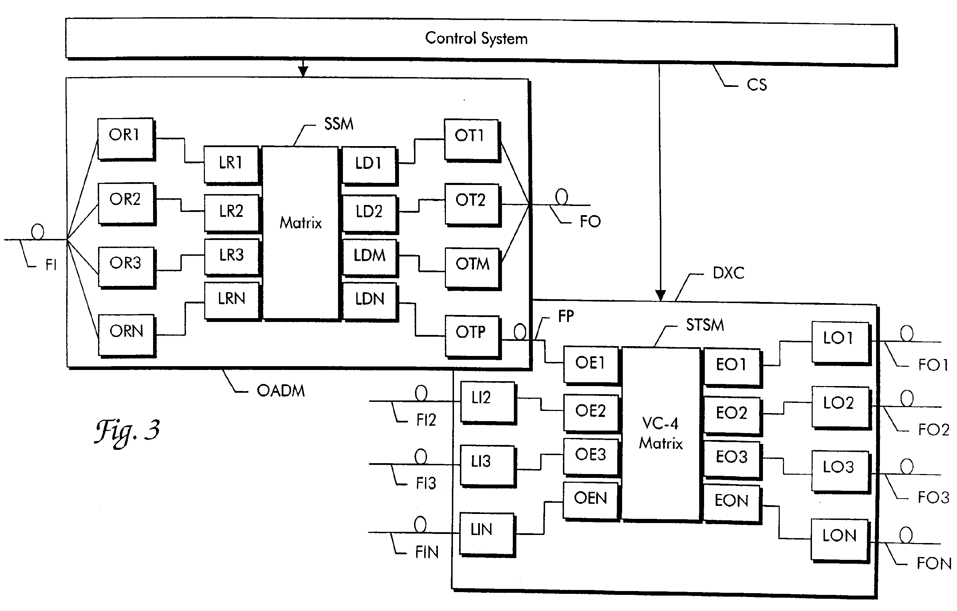

In Figur 3 ist das Zusammenwirken des optischen Add/Drop-Multiplexers OADM aus Figur 1 und des digitalen Crossconnects DXC aus Figur 2 dargestellt. Der proprietäre Ausgang OTP des OADMs ist mit dem optoelektronischen Umsetzer OE1, d.h. dem proprietären Eingang, des DXCs über eine einfache optische Faser verbunden. Da das Nachrichtensignal FP, das über diese Faser von dem OADM an den DCX gesendet wird, bereits auf den internen Takt des DXCs synchronisiert und restrukturiert ist um Pointeraktionen auszugleichen, kann das Nachrichtensignal ohne Vorverarbeitung direkt als Eingangssignal für die Schaltmatrix STSM des DXCs verwendet werden. Alle Funktionen einer Leitungsschnittstelle, die in dem DXC ausgeführt werden müssen, sind bereits sendeseitig in dem OADM realisiert. Dazu sind beide Netzelemente OADM und DXC mit dem zentralen Managementsystem CS des synchronen Übertragungsnetzes verbunden.

Um die Neutaktung des Nachrichtensignals FP in der sendeseitigen Schnittstelle OTP des OADM zu erlauben, besteht zwischen den Netzelementen eine in der Figur 3 nicht gezeigte Taktverbindung, z.B. über eine 2MHZ-Schnittstelle der beiden Geräte. D.h., die Schnittstelle OTP des OADM wird von dem DXC mit einem Referenztakt versorgt. Die Schnittstelle OTP ist also auf den Referenztakt des DXC synchronisiert während die anderen Ausgänge des OADM auf einen eigenen Takt - in der Regel den Takt des Eingangssignals, welches über die Raumschaltmatrix SSM auf den jeweiligen Ausgang geschaltet ist - synchronisiert sind. Daraus ergibt sich, daß die Schnittstelle OTP des OADM logisch und synchrontechnisch dem DXC zugeordnet ist.

In Figur 3 ist die Zusammenschaltung des erfindungsgemäßen OADMs und des DXCs gezeigt. Beide Netzelemente können vorteilhaft auch zu einem System zusammengefaßt und gemeinsam installiert werden. Insbesondere kann das System auch ein einziges Netzelement sein, in dem der OADM und der DXC integriert sind. So kann dieses integrierte Netzelement mit einer gemeinsamen Stromversorgung, einem gemeinsamen Bedienterminal und einem gemeinsamen Steuerrechner ausgestattet sind. Das integrierte Netzelement kann auch als modulares System aus Teilkomponenten wie Schnittstellenkarten und Matrixmodulen aufgebaut und in einem gemeinsamen Rack installiert sein.

## Patentansprüche

1. Optisches Netzelement (OADM) zum Verschalten von Wellenlängen eines wellenlängen-gemultiplexten optischen Multiplexsignals (FI),
- mit einem optischen Eingang für das optische Multiplexsignal (FI),
- mit einer Anzahl optischer Empfänger (OR1-ORN), die jeweils mit dem optischen Eingang verbunden sind, zum Empfangen von jeweils einer in dem optischen Multiplexsignal (FI) enthaltenen Wellenlänge,
- mit einer Anzahl optischer Sender (OT1-OTM) jeweils zum Erzeugen eines optischen Digitalsignals mit jeweils einer dem Sender zugeordneten Wellenlänge, wobei die optischen Sender ausgangsseitig mit einem gemeinsamen optischen Ausgang für ein wellenlängen-gemultiplextes optisches Ausgangssignal (FO) verbunden sind,
- mit einer zwischen den optischen Empfängern (OR1-ORN) und den optischen Sendern (OT1-OTM) angeordneten Raumschaltmatrix (SSM) zum wahlfreien Verschalten von den in den einzelnen Wellenlängen empfangenen Digitalsignalen zwischen den optischen Empfängern (OR1-ORN) und den optischen Sendern (OT1-OTM), und
- mit mindestens einem weiteren optischen Sender (OTP), der ebenfalls mit der Raumschaltmatrix (SSM) verbunden ist, zum Erzeugen eines auf einen Referenztakt synchronisierten optischen Digitalsignals (FP) mit einer Rahmenstruktur aus aufeinanderfolgenden Transportrahmen, bei der Multiplexeinheiten gemäß einer Multiplexhierarchie in einem Nutzlastbereich jedes Transportrahmens verschachtelt sind und von einem Zeiger im Kopfbereich jedes Transportrahmens adressiert werden, und wobei die Multiplexeinheiten stets so in den Transportrahmen eingebettet sind, daß der Zeigerwert von einem zum nächsten Transportrahmen unverändert bleibt.

2. Optische Netzelement nach Anspruch 1,
- bei dem die optischen Empfänger (OR1-ORN) zum Umwandeln eines in der ihnen jeweils zugewiesenen Wellenlänge enthaltenen optischen Digitalsignals in ein elektrisches Digitalsignal ausgebildet sind,
- bei dem jeder der optischen Empfänger (OR1-ORN) mit einem Leitungsempfänger (LR1-LRN) elektrisch verbunden ist,
- bei dem eine Anzahl elektrischer Leitungstreiber (LD1-LDN) vorgesehen sind, die mit jeweils einem der optischen Sender (OT1-OTM, OTP) verbunden sind, und
- bei dem die Raumschaltmatrix als elektrische NxN Raumschaltmatrix (SSM) ausgebildet und zwischen den elektrischen Leitungsempfängern (LR1-LRN) und den elektrischen Leitungstreibern (LD1-LDN) angeordneten ist.

3. Optische Netzelement nach Anspruch 1 welches als optischer Add/Drop-Multiplexer für einen 4-Faser-Ring ausgebildet ist.

4. Optische Netzelement nach Anspruch 1 welches als optischer Crossconnect ausgebildet ist.

5. Optische Netzelement nach Anspruch 1, bei dem der weitere optischen Sender (OTP) zum Ausführen der Funktionen einer Leitungsschnittstelle eines Netzelementes für ein synchrones digitales Nachrichtenübertragungsnetz ausgebildet ist.

6. Netzelement (DXC) für ein synchrones Übertragungsnetz zum Verschalten von in zeitlagen-gemultiplexten optischen Digitalsignalen verschachtelten Multiplexeinheiten, wobei die Digitalsignale eine Rahmenstruktur aus aufeinanderfolgenden Transportrahmen aufweisen, bei der die Multiplexeinheiten gemäß einer Multiplexhierarchie in einem Nutzlastbereich jedes Transportrahmens verschachtelt sind und von einem Zeiger im Kopfbereich jedes Transportrahmens adressiert werden, mit
- einer Anzahl optischer Empfänger (LI2-LIN) jeweils zum Empfangen eines der zeitlagen-gemultiplexten optischen Digitalsignale (FI2-FIN) und zum Erzeugen eines auf einen gemeinsamen Referenztakt synchronisierten internen Digitalsignals mit einer Rahmenstruktur aus aufeinanderfolgenden restrukturierten Rahmen, bei der die Multiplexeinheiten stets so in jeden der restrukturierten Rahmen eingebettet sind, daß der Zeigerwert von einem zum nächsten Rahmen unverändert bleibt,
- mit einer Anzahl optischer Sender (LO1-LON) zum Erzeugen jeweils eines zu sendenden rahmenstrukturierten, zeitlagen-gemultiplexten, optischen Digitalsignals (FO1-FON),
- mit einer zwischen den optischen Empfängern (LI2-LIN) und den optischen Sendern (LO1-LON) angeordneten Raum-Zeit-Schaltmatrix (STSM) zum wahlfreien Verschalten der in den internen Datensignalen enthaltenen Multiplexeinheiten zwischen den optischen Empfängern (LI2-LIN) und den optischen Sendern (LO1-LON), und
- mit mindestens einem optoelektronischen Wandler (OE1), der ebenfalls mit der Raum-Zeit-Schaltmatrix (STSM) verbunden ist, zum Umwandeln eines empfangenen optischen Digitalsignals in ein elektrisches Digitalsignal, wobei ein eingangsseitiger optischer Anschluß des optoelektrischen Wandlers (OE1) nach außen geführt ist, so daß dem Netzelement über diesen Anschluß ein auf denselben gemeinsamen Referenztakt synchronisiertes optisches Digitalsignals (FP) mit einer Rahmenstruktur aus aufeinanderfolgenden Transportrahmen zugeführt werden kann, bei dem darin enthaltene Multiplexeinheiten so in jeden Transportrahmen eingebettet sind, daß der Zeigerwert von einem zum nächsten Transportrahmen unverändert bleibt.

7. Netzelement nach Anspruch 6, bei dem die optischen Empfänger (LI2-LIN) ausgangsseitig mit weiteren optolelektronischen Umsetzern (OE2-OEN) über interne optischen Fasern verbunden sind und die optischen Sender (LO1-LON) eingangsseitig mit elektrooptischen Umsetzern (EO1-EON) ebenfalls über interne optische Fasern verbunden sind und bei dem die Raum-Zeit-Schaltmatrix (STSM) zwischen den optolelektronischen Umsetzern (OE12, OE2-OEN) und den elektrooptischen Umsetzern (EO1-EON) angeordneten ist.

8. Netzelement nach Anspruch 6 welches als digitaler Crossconnect ausgebildet ist.

9. System aus einem optischen Netzelement (OXC) zum Verschalten von Wellenlängen eines wellenlängen-gemultiplexten optischen Multiplexsignals (FI) und einem Netzelement (DXC) für ein synchrones Übertragungsnetz zum Verschalten von Multiplexeinheiten eines zeitlagen-gemultiplexten synchronen Digitalsignals, bei dem das optische Netzelemente aufweist:
- einen optischen Eingang für das optische Multiplexsignal (FI),
- eine Anzahl optischer Empfänger (OR1-ORN), die jeweils mit dem optischen Eingang verbunden sind, zum Empfangen von jeweils einer in dem optischen Multiplexsignal (FI) enthaltenen Wellenlänge,
- eine Anzahl optischer Sender (OT1-OTM) jeweils zum Erzeugen eines optischen Digitalsignals mit jeweils einer dem Sender zugeordneten Wellenlänge, wobei die optischen Sender ausgangsseitig mit einem gemeinsamen optischen Ausgang für ein wellenlängen-gemultiplextes optisches Ausgangssignal (FO) verbunden sind,
- eine zwischen den optischen Empfängern (OR1-ORN) und den optischen Sendern (OT1-OTM) angeordnete Raumschaltmatrix (SSM) zum wahlfreien Verschalten von den in den einzelnen Wellenlängen empfangenen Digitalsignalen zwischen den optischen Empfängern (OR1-ORN) und den optischen Sendern (OT1-OTM), und
- mindestens einen weiteren optischen Sender (OTP), der ebenfalls mit der Raumschaltmatrix (SSM) verbunden ist, zum Erzeugen eines auf einen Referenztakt synchronisierten optischen Digitalsignals (FP) mit einer Rahmenstruktur aus aufeinanderfolgenden Transportrahmen, bei der Multiplexeinheiten gemäß einer Multiplexhierarchie in einem Nutzlastbereich jedes Transportrahmens verschachtelt sind und von einem Zeiger im Kopfbereich jedes Transportrahmens adressiert werden, und wobei die Multiplexeinheiten stets so in den Transportrahmen eingebettet sind, daß der Zeigerwert von einem zum nächsten Transportrahmen unverändert bleibt,
bei dem das Netzelement (DXC) für das synchrone Übertragungsnetz aufweist:
- eine Anzahl optischer Empfänger (LI2-LIN) jeweils zum Empfangen eines der zeitlagen-gemultiplexten optischen Digitalsignale (FI2-FIN) und zum Erzeugen eines auf einen gemeinsamen Referenztakt synchronisierten internen Digitalsignals mit einer Rahmenstruktur aus aufeinanderfolgenden restrukturierten Rahmen, bei der die Multiplexeinheiten stets so in jeden der restrukturierten Rahmen eingebettet sind, daß der Zeigerwert von einem zum nächsten Rahmen unverändert bleibt,
- eine Anzahl optischer Sender (LO1-LON) zum Erzeugen jeweils eines zu sendenden rahmenstrukturierten, zeitlagen-gemultiplexten, optischen Digitalsignals (FO1-FON),
- eine zwischen den optischen Empfängern (LI2-LIN) und den optischen Sendern (LO1-LON) angeordnete Raum-Zeit-Schaltmatrix (STSM) zum wahlfreien Verschalten der in den internen Datensignalen enthaltenen Multiplexeinheiten zwischen den optischen Empfängern (LI2-LIN) und den optischen Sendern (LO1-LON), und
- mindestens einen optoelektrischen Wandler (OE1), der ebenfalls mit der Raum-Zeit-Schaltmatrix (STSM) verbunden ist, zum Umwandeln eines empfangenen optischen Digitalsignals in ein elektrisches Digitalsignal, wobei ein eingangsseitiger optischer Anschluß des optoelektrischen Wandlers (OE1) nach außen geführt ist, so daß dem Netzelement über diesen Anschluß ein auf denselben gemeinsamen Referenztakt synchronisiertes optisches Digitalsignals (FP) mit einer Rahmenstruktur aus aufeinanderfolgenden Transportrahmen zugeführt werden kann, bei dem darin enthaltene Multiplexeinheiten so in jeden Transportrahmen eingebettet sind, daß der Zeigerwert von einem zum nächsten Transportrahmen unverändert bleibt,
und bei dem der weitere optische Sender (OTP) des optischen Netzelementes (OADM) über eine interne optische Faser direkt mit dem optoelektrischen Wandler (OE1) des Netzelementes (DXC) für das synchrone Übertragungsnetz verbunden ist.

10. System nach Anspruch 9, bei dem beide Netzelemente (OADM, DXC) mit einem zentralen Netzwerkmanagementsystem (CS) des synchronen Übertragungsnetzes verbunden sind.

11. System nach Anspruch 9, bei dem die beiden Netzelemente (OADM, DXC) mit einer Taktleitung miteinander verbunden sind und das Netzelement (DXC) für das synchrone Übertragungsnetz das optische Netzelement (OADM) mit dem Referenztakt versorgt.

12. System nach Anspruch 9, welches als ein einziges Netzelement ausgeführt ist und eine gemeinsame Stromversorgung, ein gemeinsames Bedienterminal und einen gemeinsamen Steuerrechner aufweist.

13. System nach Anspruch 12, welches als modulares System aus Teilkomponenten wie Schnittstellenkarten und Matrixmodulen aufgebaut und in einem gemeinsamen Rack installiert ist.
